# EUROPEAN PATENT APPLICATION

(11) **EP 4 365 327 A1**
(43) Date of publication of application: **08.05.2024**
(21) Application number: 22832094.1
(22) Date of filing: 29.06.2022
(51) Int. Cl.: C22C 38/02, C22C 38/04, C22C 38/06, C22C 33/04, C21D 8/02, C21D 1/26, C21D 11/00, C23C 2/06, C23C 2/40, C23F 17/00

(54) **TRIP STEEL AND PREPARATION METHOD THEREFOR, COLD-ROLLED STEEL SHEET, AND HOT-DIP GALVANIZED STEEL SHEET**

(30) Priority: 29.06.2021 CN 202110727388
(71) Applicant: BAOSHAN IRON & STEEL CO., LTD., Shanghai 201900 (CN)
(72) Inventor: CHEN, Mengxiao, Shanghai 201900 (CN); ZHONG, Yong, Shanghai 201900 (CN); WANG, Li, Shanghai 201900 (CN); XIE, Shuang, Shanghai 201900 (CN)
(74) Representative: Kuhnen & Wacker Patent- und Rechtsanwaltsbüro PartG mbB
(86) International application number: PCT/CN2022/102199
(87) International publication number: WO 2023/274281

(57) **Abstract**

Disclosed in the present invention are TRIP steel and a preparation method therefor, a cold-rolled steel sheet, and a hot-dip galvanized steel sheet, wherein the TRIP steel comprises the following chemical components, in percentages by mass: C: 0.15-0.3%, Si: 0.6-1.0%, Mn: 1.7-2.5%, Al: 0.5-0.9%, P ≤ 0.01%, S ≤ 0.01%, N ≤ 0.007%, and Fe ≥ 90%. The TRIP steel of the present invention is based on carbon-silicon-manganese steel. By means of optimizing the proportions of carbon, silicon, manganese and aluminum, and replacing Si in traditional TRIP steel with a part of the Al, the effects of inhibiting carbide precipitation and stabilizing residual austenite can be achieved so as to ensure the mechanical properties of the TRIP steel, and the surface quality and plateability of the steel sheet can also be improved.

## Description

### Technical Field

The present disclosure relates to the field of metallurgical technology, and in particular to a TRIP steel and a method for preparing the same, a cold-rolled steel sheet and a hot-dip galvanized steel sheet.

### Background Art

In recent years, advanced high-strength steel for automobiles has been widely used in order to reduce body weight, achieve energy conservation and emission reduction, improve collision safety and reduce manufacturing costs. Due to its capability of increasing the strength of the steel sheet to reduce the thickness of the steel sheet while maintaining excellent formability, advanced high-strength steel is currently the most comprehensively competitive lightweight material for vehicle bodies.

Advanced high-strength steel based on the transformation-induced plasticity (TRIP) effect needs to have good ductility while maintaining high strength. In terms of microstructure, TRIP steel is composed of ferrite, bainite and retained austenite. It is mostly used in manufacture of automobile door protection rods, bumpers and chassis structural parts.

For TRIP steel, the volume fraction and stability of retained austenite are the main factors that affect its mechanical properties. In TRIP steel, it is crucial to stabilize the retained austenite and inhibit carbide precipitation. Precipitation of carbides in traditional TRIP steel is mainly suppressed by adding a relatively high content of Si. However, the high Si content will result in a layer of Si oxide on the surface of the steel material, seriously affecting the platability of the material. At the same time, TRIP steel, which has currently the most excellent combination of strength and plasticity among the first-generation advanced high-strength steel, has a product of strength and elongation of 20 GPa.% or less. In order to further improve the product of strength and elongation, the concepts for designing the third-generation advanced high-strength steel for automobiles mainly include: (1) a large amount of Mn is added to achieve a reverse transformation process of austenite to obtain austenite with excellent formability, but this increases the material cost and manufacturing difficulty, and the excessively high Mn content is also detrimental to weldability; and (2) quenching partitioning (QP process) is employed to obtain a martensitic steel structure with a certain content of retained austenite, but this imposes high requirements on the annealing process and equipment capability.

For example, Chinese Patent Application for Invention CN201610867413.9 discloses an economical high-strength cold-rolled TRIP steel with a product of strength and elongation of greater than 20GPa.%, and a method for preparing the same. The main chemical components of the TRIP steel are: C: 0.15-0.25%, Si: 1.3-1.7%, Mn: 1.5-2.5%, P: ≤ 0.030%, S: ≤0.020%, Al: 0.02-0.06%, and a balance of Fe and unavoidable impurities, based on weight. The preparation method includes: smelting, hot continuous rolling, pickling cold rolling, and continuous annealing. Although the material obtained by this method has excellent strength and plasticity, the surface quality of this material is poor due to the high Si content. As a result, color difference tends to appear on the surface of the product after hot-dip galvanization.

Chinese Patent Application for Invention CN201310520998.3 discloses a heat treatment process for 980 MPa-grade automotive steel with a high product of strength and elongation. This process is characterized by quenching a treated TRIP780 cold-rolled steel sheet and then reheating it to a certain temperature for partitioning, so as to obtain the 980 MPa-grade automotive steel with a high product of strength and elongation, which has a product of strength and elongation of 26.3-26.8GPa.% and an elongation of 23% or higher. The shortcoming is that the rapid quenching and repartitioning process imposes high requirements on the cooling and heating capabilities of the equipment, and currently available annealing equipment cannot fully meet the requirements.

Chinese Patent Application for Invention CN200810119818.X discloses a high-strength cold-rolled hot-dip galvanized TRIP steel sheet and a method for preparing the same. The advantage is that it has good platability because a low-Si composition is designed. However, the disadvantage is that the excessively high Al content will make continuous casting difficult, and it is difficult to achieve stable batch production. At the same time, the incorporation of Nb, Ti, Cu, Ni and other alloying elements in the composition also increases the production cost.

Chinese Patent Application for Invention CN201510596778.8 discloses a processing method for improving the surface quality of TRIP steel. This method is also characterized by a low-Si (≤0.5%), high-Al (1-5%) composition that is designed. Although the range of the annealing temperature is advantageously expanded greatly as compared with traditional TRIP steel, the designed high Al in the composition makes stable continuous casting difficult, and the resulting product has a low tensile strength (445-520 MPa), and a product of strength and elongation of only 16-18 GPa.%.

Chinese Patent Application for Invention CN201510112679.8 discloses a method for preparing a high-Al, medium-Mn steel with a product of strength and elongation of greater than 30GPa.%. The advantages of this TRIP steel include high strength, high elongation and low density, which can meet the requirements of the material to be selected for lightweight automobiles. However, the disadvantage is that the excessively high Mn and Al contents will make the production very difficult and the cost rather high.

Chinese Patent Application for Invention CN201110280804.8 discloses a cold-rolled TRIP steel with a grade of 1000 MPa or above and a method for preparing the same. Due to the design in which the composition includes high Si and high Al in combination with Nb and V for micro-alloying, the material has an elongation of A₈₀≥18% when Rm ≥ 1000MPa. However, due to the high Si, high Al, high Mn contents and Nb, V micro-alloying, continuous casting is more difficult, and the cost for producing the material is also increased.

### Summary

In view of the problems of the existing TRIP steel, i.e. the poor surface quality caused by the high Si content, the difficulty in the continuous casting process caused by the high Mn and Al contents, and the increased production cost caused by the use of Nb, Ti, Cu, Ni, V and the like as alloying elements, the present disclosure proposes partial substitution of Si in the traditional TRIP steel with Al, and optimization of the proportions of C, Si, Mn and Al to not only inhibit carbide precipitation and stabilize retained austenite, so as to ensure the mechanical properties of the TRIP steel, but also improve the surface quality and platability of the steel sheet, and reduce the processing difficulty and production cost.

One of the objects of the present disclosure is to provide a TRIP steel. The TRIP steel obtained by the technical solution of the present disclosure has a platable surface with good quality, and has high strength and plasticity. Specifically, the TRIP steel has a yield strength of ≥420 MPa, for example, 420-600 MPa, a tensile strength of ≥800 MPa, for example, 800-950 MPa, an elongation at break of ≥25%, for example, 25%-35%, and a product of strength and elongation of greater than 23 GPa.%.

The TRIP steel of the present disclosure comprises the following chemical ingredients in mass percentage: C: 0.15-0.3%, Si: 0.6-1.0%, Mn: 1.7-2.5%, Al: 0.5-0.9%, P≤0.01%, S≤ 0.01%, N≤0.007%, Fe≥90%.

Further, by mass percentage, the chemical ingredients of the TRIP steel of the present disclosure and the percentage contents thereof are: C: 0.15-0.3%, Si: 0.6-1.0%, Mn: 1.7-2.5%, Al: 0.5-0.9%, P≤0.01%, S≤0.01%, N≤0.007%, and a balance of Fe and unavoidable impurities.

In some embodiments, the TRIP steel of the present disclosure has a uniform elongation (UEL) of ≥ 18.5%, for example, 18.5-26.0%.

In the present disclosure, the elements are designed according to the following concepts:

Carbon (C): Carbon has a direct influence on the strength, weldability and formability of the steel sheet/steel strip. The higher the carbon content, the more conducive to improving the strength of the steel sheet. If the carbon content is less than 0.15%, the strength of the steel sheet/steel strip will not meet the target requirement; if the carbon content is higher than 0.30%, the carbon equivalent tends to be too high, thereby deteriorating the weldability of the steel sheet. At the same time, C is also an element for stabilizing austenite. Only in the presence of a certain amount of C, austenite can exist stably at room temperature, and the TRIP effect occurs to meet the high strength and plasticity required by the material. Therefore, in the present disclosure, the mass percentage of carbon is controlled to be 0.15- 0.30%; preferably, the content of C is 0.17-0.23%.

Silicon (Si): Silicon exists in the TRIP steel mainly in the form of solid solution which inhibits formation of cementite during bainite transformation. At the same time, Si is distributed in ferrite to increase the chemical potential of C and promote diffusion of C from ferrite into austenite, because the formation of carbon-rich retained austenite is the basic condition for the TRIP effect to occur. To ensure excellent plasticity of the material, the Si content should be at least 0.6%. However, Si is also an element that deteriorates the surface quality of the steel sheet. When the silicon content is higher than 1.0%, serious iron oxide scale is easily generated during hot rolling on the surface of the hot-rolled steel sheet/steel strip. The iron oxide scale not only deteriorates the surface quality of the steel sheet/steel strip, not conducive to the production of the hot-dip galvanized steel sheet/steel strip, but also damages the platability of the steel sheet/steel strip. Therefore, in the present disclosure, the mass percentage of silicon is limited to 0.6-1.0%; and preferably, the Si content is 0.7-0.9%.

Manganese (Mn): In the TRIP steel of the present disclosure, Mn can enlarge the austenite phase zone, reduce the Ms and Mf points, improve the stability of austenite and the hardenability of the steel, reduce the critical transformation rate, and help to preserve retained austenite to room temperature. It is also an important element for solid solution strengthening. However, it should be noted that if the content of Mn element in the steel is too high, it will deteriorate the corrosion resistance and welding performance, while also aggravating the grain coarsening trend and reducing the plasticity and toughness of the steel. As such, in the present disclosure, the mass percentage of Mn is controlled at 1.70-2.50%. Preferably, the Mn content is 1.8-2.0%.

Aluminum (Al): Similar to silicon, aluminum can inhibit formation of carbides during aging, thereby stabilizing retained austenite, but its effect is weaker than that of Si. Unlike Si, Al has no negative influence on the surface quality of the steel; instead, it is conducive to improving the surface quality of the hot-dip galvanized product. Since Al also has the effect of inhibiting carbide formation, Al may be added to partially replace Si to improve the platability of the TRIP steel. Al can further strongly increase the Ac3 point. When the Al content is too high, both the cogging temperature and the finish rolling temperature in the hot rolling process need to be increased, and the annealing temperature of the two-phase zone must also be increased accordingly. When the mass percentage of Al exceeds 0.9%, it is very detrimental to the continuous casting process in steelmaking, and problems such as nozzle blocking in the continuous casting process are likely to occur. Therefore, in order to obtain a TRIP steel with both excellent surface quality and good strength and plasticity, in the present disclosure, Si and Al are added in combination to achieve the above purpose of replacing Si with Al. However, when the Al content is less than 0.5%, a relatively large amount of Si (>1.0%) needs to be added in order to achieve the required product of strength and elongation. This will deteriorate the surface quality of the product, and defects such as color difference and red iron scale will appear. Therefore, in the present disclosure, the mass percentage of Al is controlled at 0.5-0.9%; and preferably, the Al content is 0.6-0.8%.

Phosphorus (P), sulfur (S), and nitrogen (N): They are impurity elements in the steel. The lower their contents, the purer the steel and the better the performances of the steel. Although P can achieve the effect of solid solution strengthening to a certain degree, can inhibit formation of carbides, and is conducive to improving the stability of retained austenite, an unduly high mass percentage of P will weaken the grain boundaries, increase the brittleness of the material, and worsen the welding performance. Therefore, the mass percentage of P needs to be controlled at P≤0.01%. As for N, because an unduly high mass percentage of N will make steelmaking and continuous casting difficult, and is not conducive to inclusion control, the mass percentage of N is controlled at N≤0.007% in the present disclosure. An unduly high mass percentage of S element in the steel will significantly deteriorate the plasticity of the material. Therefore, in the present disclosure, the mass percentage of S is controlled at S≤0.01%.

Further, the metallographic structure of the TRIP steel in the present disclosure includes 38-58% by volume of ferrite, 30-50% by volume of bainite, 10-12% by volume of retained austenite and ≤2% by volume of martensite.

If the bainite content is higher than 50%, the strength of the material is rather high, while the plasticity is insufficient. If the bainite content is below 30%, the strength is insufficient, while the plasticity is surplus. Therefore, in the present disclosure, the volume fraction of the bainite is controlled at 30-50%. The retained austenite content plays a key role for the excellent strength and plasticity of the material. The retained austenite with its volume fraction controlled in the range of 10-12% can achieve the TRIP effect to a certain degree to improve the strength and plasticity of the steel. Excellent strength and plasticity of the material can be ensured by controlling the volume fraction of the martensite at a low level.

Further, the ferrite grains of 10 µm or less account for at least 80% of the ferrite in the TRIP steel of the present disclosure, and the ferrite grains of 5 µm or less account for at least 60%. The average grain size of the retained austenite is ≤2 µm, and the average C content of the retained austenite grains is ≥1 wt%.

Further, the TRIP steel of the present disclosure has a yield strength of ≥420 MPa, for example, 420-600 MPa, a tensile strength of ≥800 MPa, for example, 800-950 MPa, an elongation at break of ≥25%, for example, 25%-35%, and a product of strength and elongation of greater than 23 GPa.%.

Another object of the present disclosure is to provide a method for preparing the above-mentioned TRIP steel, comprising the following steps:
Smelting and casting;
Hot rolling and coiling;
Cold rolling;
Continuous annealing.

Further, during the above smelting and casting, the degree of superheat continuous casting is controlled at 15-30°C.

In the continuous casting process, in order to ensure successful continuous casting of the molten steel, the molten steel needs to have a certain degree of superheat. If the degree of superheat is lower than 15°C, it is not conducive to stable continuous casting of the molten steel. If the degree of superheat is higher than 30°C, it is not conducive to the internal quality of the center of the slab, because defects, such as segregation and shrinkage cavities, are inclined to occur.

Further, in the above hot rolling step, the temperature for heating the slab is controlled to be 1150-1250°C, and the final finish rolling temperature is controlled to be 850-950°C.

During the hot rolling process, the cast slab is first heated at high temperature in the full austenite zone for a period of time to soften the material and completely diffuse the components evenly. After rough rolling to the specified thickness of the intermediate slab, the coarse structure generated in the heating furnace is broken and refined. After further rolling to the required thickness by finish rolling, a uniform and fine recrystallized structure is formed. If the final finish rolling temperature is less than 850°C, ferrite will precipitate before finish rolling, leading to a rather low bainite content in the final structure, such that the strength of the material in hot-rolled state is insufficient, and in turn, the subsequent cold rolling and annealing performances will be affected. With both the necessity to control the upper limit of the temperature for heating the slab and the temperature drop during the rolling process taken into account, the final finish rolling temperature generally does not exceed 950°C.

Further, in the above coiling step, the coiling temperature is controlled to be 520-600°C.

Furthermore, in the above cold rolling step, the cold rolling reduction is 50-70%.

The temperature for coiling the hot-rolled material is one of the most critical factors that influence the properties of the material in the hot-rolled state. If the coiling temperature is higher than 600°C, internal oxidation of Si and Mn is likely to occur on the surface of the steel sheet, and a fracture layer will be formed on the surface during pickling. As a result, the surface quality of the final product will be affected. If the coiling temperature is lower than 520°C, as the strength of the material in the hot-rolled state is rather high, it is not conducive to subsequent cold rolling, and will lead to excessive deformation resistance. After removing the oxide scale from the surface of the hot-rolled coil by pickling, the steel sheet is cold rolled to the target thickness with a cold rolling reduction of 50-70%, and accumulates certain deformation energy, which is conducive to subsequent annealing and recrystallization.

Further, in the above continuous annealing step, the steel sheet/steel strip is first held at an annealing holding temperature of 800-860°C for 60-200s, then cooled to a rapid cooling start temperature of 690-730°C at a first cooling rate of 3-10°C/s, then cooled to a rapid cooling end temperature of 350-450°C at a second cooling rate of 30-60°C/s, then held for 200-400s for aging treatment, and finally cooled to 150°C or less at a third cooling rate of 2-10°C/s.

The deformed structure after cold rolling is subjected to two-phase zone annealing at an annealing holding temperature of 800-860°C for 60-200s. The main purpose of this process is to recrystallize the structure of the cold-rolled steel sheet. If the temperature is too low, the recrystallization of the steel sheet structure will be incomplete. If the temperature is too high, grain coarsening and precipitate decomposition tend to occur in the structure of the steel sheet, leading to a reduction in the strength of the steel sheet. Therefore, in the present disclosure, the annealing holding temperature is controlled at 800-860°C. The time control of this process is also critical. Too short a time will result in incomplete recrystallization of the steel sheet structure and insufficient diffusion of the austenite stabilizing elements (C, Mn); while too long a time will easily lead to abnormal phenomena in the steel sheet structure such as abnormal grain coarsening and precipitate decomposition. Therefore, the annealing holding time is controlled at 60-200s. During this process, the steel sheet structure will be partially austenitized, and the austenite stabilizing elements such as C and Mn in the ferrite will be transferred to the austenite.

After the temperature holding process, the steel strip is then slowly cooled to 690-730°C at a first cooling rate of 3-10°C/s. During this process, the austenite in the steel sheet structure will be partially converted into ferrite, and elements such as C and Mn will be further enriched in the austenite.

Finally, the slowly cooled steel strip is rapidly cooled to 350-450°C by air blowing at a second cooling rate of 30-60°C/s, and then held at this temperature for 200-400s for aging treatment. During this process, if the cooling rate is too slow, pearlite will occur, and the performances of the steel sheet will be degraded. If the cooling rate is too fast, the difficulty in production and the manufacturing cost will be increased. Therefore, the second cooling rate is controlled at 30-60°C/s. During the aging process, the austenite will be partially converted into bainite which can improve the strength of the steel strip. After the phase transformation, carbon in the bainite is transferred to the austenite that has not undergone bainite transformation, allowing the austenite to be stably preserved to room temperature. This stage determines the carbon content, volume fraction and distribution of the retained austenite, and thus has a decisive effect on the performances of the final product. The aged steel strip is finally cooled to 150°C or below at a third cooling rate of 2-10°C/s. Below this temperature, the steel will basically no longer undergo structural phase transformation. During this process, the cooling rate should not be too fast, so as to prevent the retained austenite left during the aging process from forming new martensite during the final cooling process, which will affect the plasticity of the steel strip.

Further, the above method for manufacturing the TRIP steel also comprises a hot-dip galvanization step.

Still another object of the present disclosure is to provide a cold-rolled steel sheet made from the above TRIP steel.

For example, the steel sheet/steel strip undergoes smelting, casting; hot rolling, coiling; cold rolling; and continuous annealing to obtain a cold-rolled steel sheet.

Yet another object of the present disclosure is to provide a hot-dip galvanized steel sheet, comprising the above cold-rolled steel sheet and a hot-dip galvanized layer formed on the surface of the cold-rolled steel sheet.

For example, after the aging treatment described herein, the steel strip is subjected to a hot-dip galvanization process, wherein the steel strip that has completed bainite transformation is immersed in a zinc pot for surface galvanization to obtain a final hot-dip galvanized annealed steel sheet.

In some embodiments, the present disclosure further provides a method for preparing a hot-dip galvanized steel sheet, comprising the steps of preparing the TRIP steel and the steps of hot-dip galvanization treatment described in any embodiment herein. Further, after the aging treatment described herein, the TRIP steel strip is immersed in a zinc pot for surface galvanization, thereby obtaining the hot-dip galvanized steel sheet.

The microstructure of the above cold-rolled steel sheet and the microstructure of the above hot-dip galvanized steel sheet both include ferrite, bainite, retained austenite and trace martensite phases, wherein the bainite content is 30-50%, the retained austenite content is 10-12%, the martensite content is 2% or less, and the remainder is the ferrite phase. There is also no significant difference between the cold-rolled steel sheet and the hot-dip galvanized steel sheet in their mechanical performances.

The beneficial effects of the present disclosure include:
1. The TRIP steel of the present disclosure is based on carbon-silicon-manganese steel. By optimizing the proportions of carbon, silicon, manganese and aluminum, Si in traditional TRIP steel is partially replaced with Al. The replacement can not only achieve the effect of inhibiting carbide precipitation and stabilizing retained austenite to ensure the mechanical performances of the TRIP steel, but also improve the quality and platability of the surface of the steel sheet. The use of the elemental components according to the present disclosure can tackle the problem of surface defects commonly seen on hot-dip galvanized products of high Si TRIP steel, such as color difference and missing plating.
2. No other precious alloying elements, such as Ti, Nb, Cr, and Mo, are added in addition to the most basic C, Si, Mn, and Al elements according to the present disclosure. As a result, while the comprehensive mechanical performances and good surface platability of the TRIP steel are guaranteed, the material cost is minimized in the production, and the applicability of the steel is maximized. Therefore, the steel is suitable for market promotion and has good application prospects.
3. In the present disclosure, by accurately controlling the final finish rolling temperature, coiling temperature, and the temperature and cooling rate of the continuous annealing process, it is ensured that the final cold-rolled steel sheet and hot-dip galvanized steel sheet have appropriate microstructure distribution and grain size to avoid occurrence of mixed crystals or coarse grains which may affect the mechanical performances of the steel.
4. With the use of the technical solution of the present disclosure, a TRIP steel having good surface quality and comprehensive mechanical performances can be obtained. The structure of the steel comprises 38-58% by volume of ferrite, 30-50% by volume of bainite, 10-12% by volume of retained austenite and ≤2% by volume of martensite, wherein ferrite grains of 10 µm or less account for 80% or more of the ferrite, and ferrite grains of 5 µm or less account for 60% or more of the ferrite, wherein the average grain size of the retained austenite is ≤2 µm, and the average C content of the retained austenite grains is ≥1wt%; wherein the TRIP steel has a yield strength of ≥420MPa (e.g. 420-600MPa), a tensile strength of ≥800MPa (e.g. 800-950MPa), an elongation at break of ≥25% (e.g. 25%-35%), and a product of strength and elongation of greater than 23GPa.%.

### Description of the Drawings

The drawings are only aimed to illustrate some specific examples, and should not to be construed as limitations to the present disclosure.
Figure 1 is an image showing the morphology of the microstructure of the TRIP steel in Example 7 according to the present disclosure;
Figure 2 is an EBSD image showing the metallographic structure of the TRIP steel in Example 7 according to the present disclosure;
Figure 3 is an image showing the surface morphology of the hot-dip galvanized product of the TRIP steel in Example 7 according to the present disclosure;
Figure 4 is an image showing the surface morphology of the hot-dip galvanized product of the TRIP steel in Comparative Example 2 in the present disclosure;
Figure 5 is an image showing the surface morphology of the hot-dip galvanized product of the TRIP steel in Comparative Example 1 in the present disclosure.

### Detailed Description

The embodiments of the present disclosure will be described below with reference to specific examples. Those skilled in the art can readily recognize other advantages and effects of the present disclosure from the disclosure of this specification. Although the present disclosure will be described with reference to preferred examples, this does not mean that the features of the present disclosure are limited to these embodiments. On the contrary, the purpose of describing the present disclosure with reference to the embodiments is to cover other options or modifications that may be derived from the claims of the present disclosure. The following description contains a variety of specific details in order to provide a thorough understanding of the present disclosure. The present disclosure may also be practiced without these details. Furthermore, some specific details will be omitted from the description in order to avoid confusing or obscuring the highlights of the present disclosure. It should be noted that, as long as there is no conflict, the examples of the present disclosure and the features in the examples may be combined with each other.

### Examples 1-20 and Comparative Examples 1-3

The TRIP steel of Examples 1-20 in the present disclosure was prepared by the following steps:
Step 1. Smelting and continuous casting: Smelting was performed according to the chemical compositions shown in Table 1, followed by continuous casting to obtain a slab. During the continuous casting, the target temperature of the tundish was controlled to be 15-30°C above the liquidus temperature, and dynamic soft reduction and magnetic stirring were applied during the casting process.
Step 2. Hot rolling the steel slab: The temperature for heating the slab was 1150-1250°C. After rough rolling, the slab was further rolled to the required thickness by finish rolling. The final finish rolling temperature was 850-950°C.
Step 3. Cooling and coiling after rolling: Water cooling was performed after rolling, and the coiling temperature was 520-600°C.
Step 4: Pickling to remove iron oxide scale.
Step 5. Cold rolling: The above hot-rolled slab was cold rolled with a reduction of 50-70% to achieve the required target thickness.
Step 6. Continuous annealing and hot-dip galvanization: After holding at the annealing holding temperature of 800-860°C for 60-200s, the slab was cooled to the rapid cooling start temperature of 690-730°C at a first cooling rate of 3-10°C/s to obtain a certain proportion of ferrite; then the slab was rapidly cooled to the rapid cooling end temperature of 350-450°C at a second cooling rate of 30-60°C/s; then the slab was held for 200-400s for aging treatment; after the aging treatment, the steel strip/steel sheet was hot-dip galvanized; finally, it was cooled to 150°C or less at a third cooling rate of 2-10°C/s to obtain the final hot-dip galvanized annealed steel sheet.

The TRIP steel of Comparative Examples 1-3 was also prepared by the steps of smelting, continuous casting, hot rolling, coiling, cold rolling, continuous annealing and hot-dip galvanization. The chemical compositions of the steel and the process parameters of the preparation process are shown in Tables 1 to 2 in detail.

Table 1 lists the mass percentages of the various chemical elements in the TRIP steel of the Examples and Comparative Examples.

**Table 1. (%, the balance is Fe and other unavoidable impurities besides P, S, and N)**

| Steel composition designation | C | Si | Mn | Al | P | S | N |
|---|---|---|---|---|---|---|---|
| A | 0.15 | 1.0 | 2.5 | 0.5 | 0.010 | 0.007 | 0.0068 |
| B | 0.17 | 0.9 | 2.2 | 0.8 | 0.009 | 0.006 | 0.0061 |
| C | 0.23 | 0.7 | 2.0 | 0.6 | 0.005 | 0.008 | 0.0054 |
| D | 0.30 | 0.6 | 1.7 | 0.9 | 0.010 | 0.008 | 0.0068 |
| E | 0.20 | 0.8 | 1.8 | 0.7 | 0.008 | 0.007 | 0.0059 |
| a | 0.13 | 0.8 | 2.4 | 0.8 | 0.007 | 0.005 | 0.0062 |
| b | 0.18 | 1.2 | 2.0 | 0.3 | 0.010 | 0.005 | 0.0061 |
| c | 0.26 | 0.3 | 2.2 | 0.9 | 0.010 | 0.003 | 0.0064 |

Table 2-1 and Table 2-2 list the specific process parameters for the TRIP steel of Examples 1-20 and the comparative steel of Comparative Examples 1-3.

**Table 2-1. Specific process parameters employed in the methods for preparing the TRIP steel of Examples 1-20 and Comparative Examples 1-3**

| No. | Designation of steel composition used | Continuous casting superheat/°C | Slab heating temperature (°C) | Final rolling temperature (°C) | average coiling temperature (°C) |
|---|---|---|---|---|---|
| Ex. 1 | A | 15 | 1220 | 903 | 576 |
| Ex. 2 | A | 15 | 1235 | 910 | 590 |
| Ex. 3 | A | 15 | 1160 | 908 | 550 |
| Ex. 4 | A | 15 | 1200 | 925 | 570 |
| Ex. 5 | B | 20 | 1230 | 930 | 530 |
| Ex. 6 | B | 20 | 1190 | 950 | 597 |
| Ex. 7 | B | 20 | 1250 | 917 | 520 |
| Ex. 8 | B | 20 | 1210 | 920 | 562 |
| Ex. 9 | C | 25 | 1230 | 850 | 555 |
| Ex. 10 | C | 25 | 1245 | 920 | 570 |
| Ex. 11 | C | 25 | 1210 | 924 | 525 |
| Ex. 12 | C | 25 | 1190 | 939 | 580 |
| Ex. 13 | D | 30 | 1250 | 875 | 580 |
| Ex. 14 | D | 30 | 1230 | 906 | 525 |
| Ex. 15 | D | 30 | 1210 | 885 | 565 |
| Ex. 16 | D | 30 | 1155 | 945 | 600 |
| Ex. 17 | E | 23 | 1230 | 870 | 550 |
| Ex. 18 | E | 23 | 1220 | 890 | 530 |
| Ex. 19 | E | 23 | 1160 | 900 | 580 |
| Ex. 20 | E | 23 | 1180 | 930 | 590 |
| Comp. Ex. 1 | a | 40 | 1280 | 830 | 650 |
| Comp. Ex. 2 | b | 20 | 1250 | 917 | 520 |
| Comp. Ex. 3 | c | 30 | 1220 | 830 | 560 |

**Table 2-2. Process parameters employed in the methods for preparing the TRIP steel of Examples 1-20 and Comparative Examples 1-3**

| No. | Average cold rolling reduction/ % | Annealing holding temperatu re/°C | Annealin g holding time/s | First cooling rate (°C/s) | Rapid cooling start temperatur e/°C | Rapid cooling end temperatur e/°C | Second cooling rate (°C/s) | Aging time/s | Third cooling rate (°C/s) |
|---|---|---|---|---|---|---|---|---|---|
| Ex. 1 | 70 | 850 | 60 | 8 | 700 | 380 | 60 | 300 | 10 |
| Ex. 2 | 60 | 845 | 60 | 7 | 715 | 400 | 40 | 350 | 6 |
| Ex. 3 | 60 | 830 | 60 | 4 | 690 | 420 | 40 | 250 | 7 |
| Ex. 4 | 50 | 825 | 60 | 8 | 720 | 430 | 50 | 400 | 5 |
| Ex. 5 | 60 | 860 | 100 | 4 | 700 | 420 | 40 | 400 | 7 |
| Ex. 6 | 60 | 840 | 100 | 9 | 730 | 450 | 50 | 350 | 7 |
| Ex. 7 | 70 | 825 | 100 | 5 | 720 | 430 | 50 | 300 | 6 |
| Ex. 8 | 70 | 805 | 100 | 4 | 690 | 355 | 30 | 200 | 5 |
| Ex. 9 | 50 | 850 | 80 | 8 | 730 | 420 | 40 | 300 | 3 |
| Ex. 10 | 50 | 820 | 80 | 9 | 700 | 430 | 40 | 300 | 6 |
| Ex. 11 | 60 | 830 | 80 | 6 | 690 | 400 | 60 | 400 | 7 |
| Ex. 12 | 60 | 825 | 80 | 8 | 710 | 410 | 60 | 250 | 9 |
| Ex. 13 | 60 | 805 | 150 | 6 | 730 | 360 | 50 | 400 | 7 |
| Ex. 14 | 60 | 815 | 150 | 5 | 710 | 420 | 50 | 350 | 6 |
| Ex. 15 | 70 | 820 | 150 | 7 | 700 | 410 | 60 | 300 | 6 |
| Ex. 16 | 70 | 855 | 150 | 10 | 720 | 430 | 60 | 300 | 5 |
| Ex. 17 | 50 | 830 | 200 | 4 | 700 | 430 | 40 | 250 | 7 |
| Ex. 18 | 50 | 840 | 200 | 8 | 710 | 440 | 40 | 250 | 6 |
| Ex. 19 | 60 | 810 | 200 | 7 | 695 | 380 | 50 | 350 | 8 |
| Ex. 20 | 60 | 855 | 200 | 6 | 720 | 410 | 50 | 350 | 5 |
| Comp. Ex. 1 | 60 | 850 | 30 | 8 | 720 | 500 | 50 | 400 | 16 |
| Comp. Ex. 2 | 50 | 820 | 150 | 5 | 730 | 450 | 23 | 390 | 7 |
| Comp. Ex. 3 | 50 | 830 | 150 | 20 | 650 | 420 | 40 | 150 | 7 |

Table 3 lists the mechanical performance test results of the TRIP steel of Examples 1-20 and Comparative Examples 1-3. The tests were performed according to ISO6892:1998 (Metallic materials - Tensile testing at ambient temperature) using P14 (A₅₀) standard tensile test pieces.

**Table 3. Mechanical performance test results of the TRIP steel of Examples 1-20 and Comparative Examples 1-3**

| No. | YS/MPa | TS/MPa | UEL/% | TEL/% | Product of strength and elongation/GPa.% |
|---|---|---|---|---|---|
| Ex. 1 | 421 | 877 | 20.7 | 28.2 | 24.73 |
| Ex. 2 | 441 | 856 | 20.9 | 29.1 | 24.91 |
| Ex. 3 | 453 | 843 | 20.7 | 30.3 | 25.54 |
| Ex. 4 | 435 | 851 | 20.6 | 29.3 | 24.93 |
| Ex. 5 | 571 | 947 | 19.7 | 25.3 | 23.96 |
| Ex. 6 | 451 | 837 | 23.7 | 31.7 | 26.53 |
| Ex. 7 | 495 | 821 | 24.9 | 33.1 | 27.18 |
| Ex. 8 | 489 | 807 | 25.1 | 34.7 | 28.00 |
| Ex. 9 | 597 | 936 | 18.9 | 25.3 | 23.68 |
| Ex. 10 | 461 | 857 | 24.7 | 32.7 | 28.02 |
| Ex. 11 | 457 | 867 | 23.2 | 31.6 | 27.40 |
| Ex. 12 | 449 | 850 | 20.9 | 30.7 | 26.10 |
| Ex. 13 | 457 | 849 | 20.7 | 30.5 | 25.89 |
| Ex. 14 | 440 | 887 | 19.2 | 26.8 | 23.77 |
| Ex. 15 | 435 | 893 | 19.8 | 27.6 | 24.65 |
| Ex. 16 | 564 | 938 | 18.7 | 25.1 | 23.54 |
| Ex. 17 | 468 | 876 | 22.7 | 30.5 | 26.72 |
| Ex. 18 | 449 | 862 | 22.5 | 30.1 | 25.95 |
| Ex. 19 | 432 | 821 | 21.7 | 30.2 | 24.79 |
| Ex. 20 | 520 | 898 | 19.5 | 27.1 | 24.33 |
| Comp. Ex. 1 | 387 | 780 | 17.3 | 23.9 | 18.64 |
| Comp. Ex. 2 | 467 | 840 | 19.2 | 25.8 | 21.67 |
| Comp. Ex. 3 | 400 | 860 | 14.1 | 19.6 | 16.86 |

As shown by Table 3, the TRIP steel of Examples 1-20 of the present disclosure has excellent plasticity while its strength is ensured. It has a yield strength of 420-600MPa, a tensile strength of 800-950MPa, and an elongation at break of 25%-35 %. At the same time, the product of strength and elongation of the material is greater than 23GPa.%, and can be up to 28GPa.%.

Table 4 lists the observation results of the microstructure of the TRIP steel of Examples 1-20.

**Table 4. The observation results of the microstructure of the TRIP steel of Examples 1-20**

| No. | Volume fraction of ferrite/% | Volume fraction of bainite/% | Volume fraction of retained austenite/% | Volume fraction of martensite/ % | ≤10µm ferrite grain fraction/% | ≤5µm ferrite grain fraction/% | Average size of retained austenite/µ m | Average C content of retained austenite grains/wt% |
|---|---|---|---|---|---|---|---|---|
| Ex. 1 | 42.37 | 44.56 | 11.19 | 1.88 | 81.77 | 62.35 | 0.9 | 1.17 |
| Ex. 2 | 46.52 | 40.55 | 11.47 | 1.46 | 85.64 | 64.53 | 0.7 | 1.23 |
| Ex. 3 | 49.78 | 38.12 | 11.12 | 0.98 | 80.97 | 74.24 | 0.8 | 1.25 |
| Ex. 4 | 45.65 | 42.34 | 10.34 | 1.67 | 85.98 | 69.62 | 1.1 | 1.15 |
| Ex. 5 | 38.57 | 48.78 | 10.77 | 1.88 | 86.06 | 64.35 | 1.5 | 1.27 |
| Ex. 6 | 44.25 | 42.78 | 11.41 | 1.56 | 82.19 | 67.60 | 1.3 | 1.24 |
| Ex. 7 | 54.43 | 33.10 | 10.60 | 1.87 | 93.24 | 62.88 | 1.6 | 1.18 |
| Ex. 8 | 55.70 | 30.45 | 11.85 | 200 | 84.26 | 64.45 | 1.4 | 1.21 |
| Ex. 9 | 49.31 | 39.34 | 10.12 | 1.23 | 87.24 | 63.50 | 0.7 | 1.31 |
| Ex. 10 | 50.10 | 36.67 | 11.78 | 1.45 | 88.66 | 72.49 | 1.2 | 1.24 |
| Ex. 11 | 56.47 | 31.34 | 10.96 | 1.23 | 83.84 | 63.96 | 0.9 | 1.13 |
| Ex. 12 | 45.33 | 41.12 | 11.77 | 1.78 | 91.29 | 66.51 | 0.8 | 1.17 |
| Ex. 13 | 52.92 | 34.23 | 10.88 | 1.97 | 87.12 | 69.01 | 1.6 | 1.26 |
| Ex. 14 | 49.89 | 37.96 | 10.70 | 1.45 | 83.22 | 75.06 | 1.1 | 1.24 |
| Ex. 15 | 49.70 | 38.45 | 10.88 | 0.97 | 83.67 | 64.51 | 1.4 | 1.15 |
| Ex. 16 | 39.84 | 47.56 | 11.37 | 1.23 | 85.74 | 60.73 | 1.2 | 1.22 |
| Ex. 17 | 50.02 | 38.09 | 11.02 | 0.87 | 90.21 | 60.22 | 1.1 | 1.34 |
| Ex. 18 | 51.23 | 36.42 | 11.23 | 1.12 | 89.21 | 62.33 | 1.4 | 1.22 |
| Ex. 19 | 56.78 | 31.42 | 10.78 | 1.02 | 83.41 | 62.89 | 1.3 | 1.34 |
| Ex. 20 | 40.54 | 46.89 | 11.45 | 1.12 | 88.43 | 63.89 | 1.2 | 1.24 |

As it can be seen with reference to Table 3 and Table 4, the microstructure of the TRIP steel of Examples 1-20 of the present disclosure is with 38-58% by volume of ferrite + 30-50% by volume of bainite + 10-12 % by volume of retained austenite + trace martensite (<_2% by volume). In the ferrite, grains of 10 µm or less account for 80% or more, and grains of 5 µm or less account for 60% or more. The average grain size of the retained austenite is ≤ 2 µm, and the average C content of the retained austenite grains is ≥ 1 wt%. The above results indicate that the TRIP steel in each example of the present disclosure has a certain amount of fine-grained ferrite, and has good structural uniformity. At the same time, the TRIP steel of the present disclosure contains a considerable amount of retained austenite, which can ensure the TRIP effect during deformation, so that the TRIP steel in each example can have excellent plasticity while ensuring a tensile strength of 800 MPa or more.

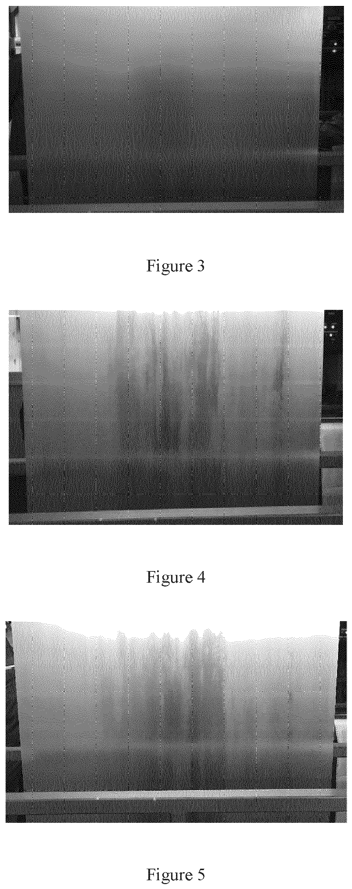

As Al is used to replace Si in the steel composition system to reduce the Si content in the steel composition according to the design concept, the surface quality of the steel is improved greatly, and thus the problem of surface defects commonly seen on the high Si hot-dip galvanized products such as color differences and missing plating can be solved. Figures 3 and 4 show the surface quality of the hot-dip galvanized products prepared in Example 7 and Comparative Example 2 respectively. By comparison, it can be seen that the surface quality of Example 7 is improved significantly, because the typical surface defect of color difference present in the center of the plate width in Comparative Example 2 does not exist. At the same time, Figure 5 shows the surface quality of the hot-dip galvanized product prepared in Comparative Example 1. Although the Si content is low, the surface defect of color difference still appears because the hot-rolling coiling temperature selected in the preparation of Comparative Example 1 is too high.

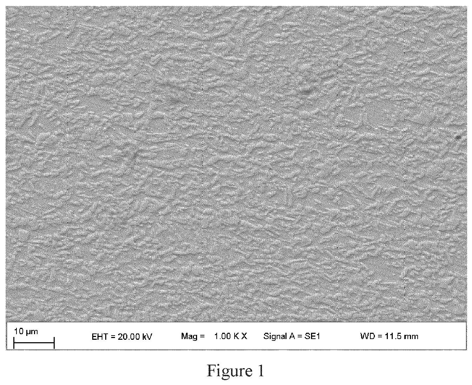

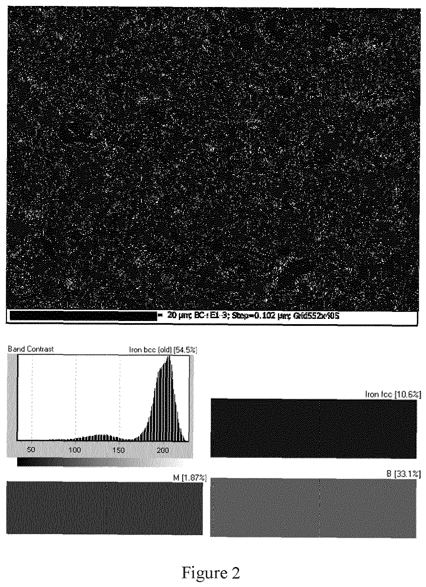

Figure 1 is an image showing the morphology of the microstructure of the TRIP steel in Example 7. Figure 2 is an EBSD image showing the metallographic structure of the TRIP steel in Example 7.

As it can be seen with reference to Figure 1 and Figure2, the microstructure of the TRIP steel in Example 7 is 54.43% ferrite + 33.10% bainite + 10.60% retained austenite + 1.87% martensite. In the ferrite, grains of 10 µm or less account for 93.24%, and grains of 5 µm or less account for 62.88%. The average grain size of the retained austenite is 1.6 µm; and/or the average C content in the retained austenite is 1.18 wt%. This TRIP steel has good comprehensive mechanical performances. Specifically, it has a yield strength of 495MPa, a tensile strength of 821MPa, a uniform elongation of 24.9%, an elongation at break of 33.1%, and a product of strength and elongation of 27.18GPa.%.

To sum up, the TRIP steel of the present disclosure is based on carbon-silicon-manganese steel. In order to improve the surface quality and platability of the steel sheet, a certain amount of Al element is added to replace Si with Al, and at the same time, the Si content is reduced greatly as compared with that commonly used in traditional TRIP steel. Moreover, no other expensive alloying elements are added. By optimizing the proportions of carbon, silicon, manganese and aluminum, a cold-rolled steel sheet having excellent surface quality and a high product of strength and elongation, and a hot-dip galvanized product thereof can be obtained. With the same strength, the TRIP steel obtained by the technical solution of the present disclosure has better elongation, and has good application prospects in automobile safety and structural parts. It is especially suitable for manufacturing vehicle structural parts and safety parts having complex shapes and high requirements on formability, such as A/B pillars, door anti-collision bars, girders, bumpers, etc.

Although the present disclosure has been illustrated and described with reference to certain preferred embodiments of the present disclosure, those skilled in the art should understand that the above content is a further detailed description of the present disclosure with reference to specific embodiments, and cannot be construed that the specific practice of the present disclosure is only limited to this description. Those skilled in the art can make various changes in form and details, including making several simple deductions or substitutions, without departing from the spirit and scope of the present disclosure.

## Claims

1. A TRIP steel comprising the following chemical ingredients in mass percentage: C: 0.15-0.3%, Si: 0.6-1.0%, Mn: 1.7-2.5%, Al: 0.5-0.9%, P≤0.01%, S≤ 0.01%, N≤0.007%, Fe≥90%.

2. The TRIP steel of claim 1, wherein the TRIP steel comprises: C: 0.15-0.3%, Si: 0.6-1.0%, Mn: 1.7-2.5%, Al: 0.5-0.9%, P≤0.01%, S≤0.01%, N≤0.007%, and a balance of Fe and unavoidable impurities.

3. The TRIP steel of claim 1, wherein a C content is 0.17-0.23%.

4. The TRIP steel of claim 1, wherein a Si content is 0.7-0.9%.

5. The TRIP steel of claim 1, wherein a Mn content is 1.8-2.0%.

6. The TRIP steel of claim 1, wherein an Al content is 0.6-0.8%.

7. The TRIP steel of any one of claims 1-6, wherein a metallographic structure of the TRIP steel includes 38-58% by volume of ferrite, 30-50% by volume of bainite, 10-12% by volume of retained austenite and ≤2% by volume of martensite.

8. The TRIP steel of claim 7, wherein ferrite grains of 10 µm or less account for at least 80% of the ferrite in the TRIP steel, and ferrite grains of 5 µm or less account for at least 60%, wherein an average grain size of the retained austenite is ≤2 µm, and an average C content of the retained austenite grains is ≥1 wt%.

9. The TRIP steel of any one of claims 1-6, wherein the TRIP steel has a yield strength of ≥420 MPa, a tensile strength of ≥800 MPa, an elongation at break of ≥25%, and a product of strength and elongation of greater than 23 GPa.%.

10. The TRIP steel of any one of claims 1-6, wherein the TRIP steel has a yield strength of 420-600 MPa, a tensile strength of 800-950 MPa, an elongation at break of 25%-35%, and a product of strength and elongation of greater than 23 GPa.%.

11. A method for preparing the TRIP steel of any one of claims 1-10, comprising the following steps:
smelting, casting;
hot rolling, coiling;
cold rolling;
continuous annealing.

12. The method for preparing the TRIP steel according to claim 11, wherein process parameters of the method are controlled to satisfy at least one of:
in the step of smelting and casting, controlling a degree of superheat in continuous casting at 15-30°C;
in the step of hot rolling, controlling a temperature for heating a slab at 1150-1250°C, and a final finish rolling temperature at 850-950°C;
in the step of coiling, controlling a coiling temperature at 520-600°C;
in the step of cold rolling, a cold rolling reduction is 50-70%;
in the step of continuous annealing, first holding at an annealing holding temperature of 800-860°C for 60-200s, then cooling to a rapid cooling start temperature of 690-730°C at a first cooling rate of 3-10°C/s, then cooling to a rapid cooling end temperature of 350-450°C at a second cooling rate of 30-60°C/s, then holding for 200-400s for aging treatment, and finally cooling to 150°C or less at a third cooling rate of 2-10°C/s.

13. A method for preparing a hot-dip galvanized TRIP steel sheet, wherein the method comprises the steps for preparing the TRIP steel according to claim 11 or 12, and a step of hot-dip galvanization treatment.

14. A cold-rolled steel sheet prepared from the TRIP steel of any one of claims 1-10.

15. A hot-dip galvanized steel sheet comprising the cold-rolled steel sheet of claim 14 and a hot-dip galvanized layer formed on a surface of the cold-rolled steel sheet.
